# EUROPÄISCHE PATENTSCHRIFT

(11) **EP 1 919 132 B1**
(45) Veröffentlichungstag und Bekanntmachung des Hinweises auf die Patenterteilung: **05.03.2014**
(21) Anmeldenummer: 07020639.6
(22) Anmeldetag: 22.10.2007
(51) Int. Cl.: H04L 12/26

(54) **Diagnoseverfahren und -vorrichtung für ein Feldbussystem**
Diagnostic method and device for a field bus system
Procédé et dispositif de diagnostic pour un système de bus de terrain

(30) Priorität: 31.10.2006 DE 102006051444
(43) Veröffentlichungstag der Anmeldung: 07.05.2008
(73) Patentinhaber: Softing AG, 85540 Haar (DE)
(72) Erfinder: Endl, Hans, Dr., 85591 Vaterstetten (DE); Palme, Dirk, 82110 Germering (DE)
(74) Vertreter: Karl, Christof

(56) Entgegenhaltungen:
- DE-A1-102004 055 698
- US-A1- 2002 161 940
- US-A1- 2005 027 379
- MUSKINJA N ET AL: "Use of TCP/IP protocol in industrial environment" INDUSTRIAL TECHNOLOGY, 2003 IEEE INTERNATIONAL CONFERENCE ON MARIBOR, SLOVENIA DEC. 10-12, 2003, PISCATAWAY, NJ, USA,IEEE, Bd. 2, 10. Dezember 2003 (2003-12-10), Seiten 896-900, XP010698870 ISBN: 0-7803-7852-0
- TAE-EOG LEE ET AL: "Virtual Control" IEEE ROBOTICS & AUTOMATION MAGAZINE, IEEE SERVICE CENTER, PISCATAWAY, NJ, US, Bd. 11, Nr. 3, September 2004 (2004-09), Seiten 33-49, XP011119710 ISSN: 1070-9932

## Beschreibung

Die Erfindung betrifft ein computer-implementiertes Diagnoseverfahren und eine Diagnoseeinrichtung für ein Feldbussystem, in dem eine oder mehrere Steuerungen und mehrere Feldgeräte über einen Feldbus Daten gemäß einem vorgegebenen Kommunikationsprotokoll austauschen.

Feldbussysteme sind in der Industrie verbreitete, digitale Kommunikationssysteme, die eine Vielzahl von Feldgeräten, wie Sensoren, Stellglieder und Antriebe, Ein- und Ausgabebaugruppen, Steuerungen, Bediengeräten und Anzeigen sowie anderen Komponenten der Automatisierungstechnik miteinander verbinden. Heute sind unterschiedliche Feldbussysteme mit unterschiedlichen Eigenschaften auf dem Markt etabliert, z.B. PROFIBUS, INTERBUS, Control Net, FOUNDATION Fieldbus, CAN oder LON. In den letzten Jahren etablierten sich ferner im industriellen Bereich zunehmend Kommunikationssysteme auf der Basis von Ethernet mit Erweiterung für Echtzeit, die das Potential besitzen, die bisher bekannten Feldbussysteme zukünftig abzulösen. Im Kontext der vorliegenden Erfindung bezeichnet somit der Begriff Feldbus als solche-lokalen Netze, die sich für industrielle Anwendungen zum Verbinden von Feldgeräten und Steuerungen eignen.

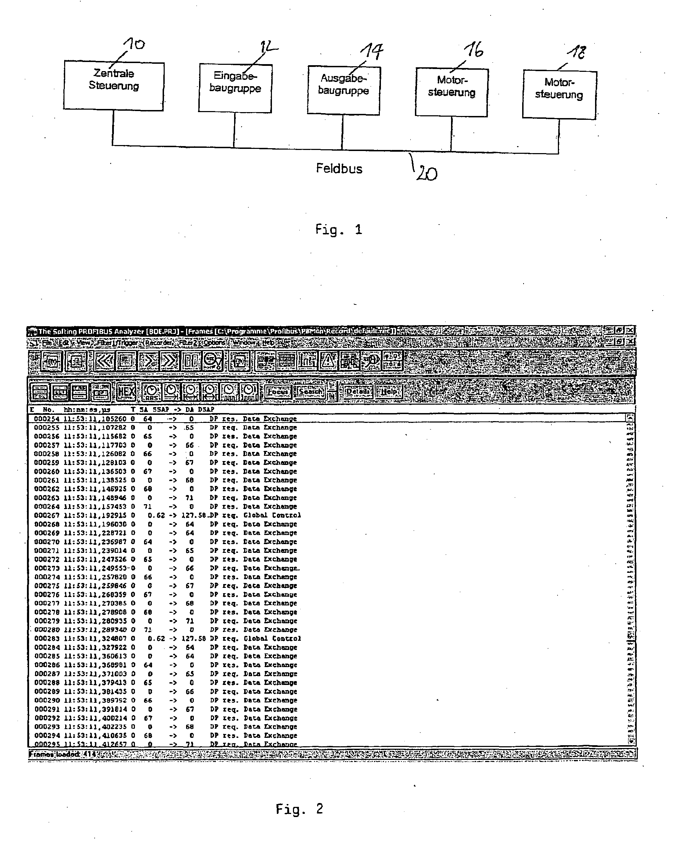

Fig. 1 zeigt schematisch ein Beispiel für ein solches Feldbussystem, in dem eine zentrale Steuerung 10 mit einer Vielzahl von Feldgeräten 12, 14, 16, 18 über eine Feldbusleitung 20 verbunden ist. Die Erfindung ist auch auf Systeme mit mehreren Steuerungen anwendbar.

Ein Feldbussystem arbeitet auf der Grundlage eines Protokollstacks, der aus drei bis sieben aufeinander aufbauenden Protokollschichten aufgebaut ist, einschließlich einer physikalischen Schicht (physical layer), einer Sicherungsschicht (data link layer) und einer Anwendungsschicht (application layer). Die Datenübertragung zwischen den Feldgeräten erfolgt auf der physikalischen Schicht und der Sicherungsschicht. Die physikalische Schicht spezifiziert, wie Signale gesendet werden; die Feldbus-Sicherungsschicht spezifiziert, wie das Netz gemeinsam genutzt wird und die einzelnen Geräte Zugriff auf das Netz erhalten; und die Anwendungsschicht definiert die anwendungsspezifischen Dienste und Datenformate.

In Feldbussystemen werden digital kodierte Daten in diskreten Segmenten übertragen, die im allgemeinen als Datenpakete oder Telegramme bezeichnet werden. Die Anzahl der Teilnehmer, die sich ein Feldbus-Medium teilen, ist variabel und liegt in der Regel zwischen 2 und 32 Feldgeräten, wobei logische Verbünde aus mehreren Feldbussegmenten auch dreistellige Teilnehmerzahlen aufweisen können.

Die Datenpakete werden zwischen den Feldgeräten und der Steuerung auf dem Feldbus übertragen. Jedes Datenpaket kann Information bezüglich der Sicherungsschicht sowie Information bezüglich der Anwendungsschicht oder, abhängig von der Architektur des Systems, bezügliche weitere Schichten enthalten.

In einem Feldbussystem können Fehler in unterschiedlichen Schichten auftreten, angefangen von physikalischen Fehlern, wie ungültige Signalpegel, ungültige Signalformen und elektromagnetische Störungen, über Fehler der Sicherungsschicht, wie Protokollverletzungen, bis hin zu Fehlern der Anwendungsschicht, wie falsche Konfiguration der Kommunikationsbeziehungen zwischen den Busteilnehmern. Bleiben die Fehler unerkannt, kann dies zum Verlust kritischer Information und zum fehlerhaften Betrieb der von dem Feldbussystem gesteuerten Feldgeräte führen. Fehler können auch das Feldbussystem selbst beeinträchtigen. Zum Erfassen, Analysieren und Beheben solcher Fehler wird daher der Datenverkehr auf dem Feldbus beobachtet.

Zur Funktionsüberprüfung und zur Fehlersuche in Feldbussystemen werden im Stand der Technik Protokollanalysatoren, wie Telegrammanalysatoren und Busmonitore, eingesetzt. Solche in der Regel PC-basierten Programme werden über eine Busschnittstelle, wie ein Ethernet-Port oder ein PROFIBUS-Interface, an das zu untersuchende Feldbussystem angeschlossen. Im Stand der Technik ist es auch bekannt, eigenständige Prüfgeräte, in denen die Busschnittstelle, ein Display und die Prüfsoftware in einem Gerät integriert sind, an das Feldbussystem anzuschließen.

Protokollanalysatoren verhalten sich passiv, d.h. sie beobachten den Datenverkehr auf dem Feldbus, senden jedoch nicht selbst, und zeichnen die auf dem Feldbus übertragenen Datenpakete (Telegramme) auf. Frühere Versionen von Protokollanalysatoren hatten zwar schon die Möglichkeit der Datenerfassung in Echtzeit, die Möglichkeiten der Analyse waren jedoch begrenzt. Zunächst wurden die Datenpakete erfaßt und gespeichert, und zu einem späteren Zeitpunkt wurden sie analysiert. Die Speicherung umfaßt üblicherweise die Darstellung der Datenpakete in symbolischer Form in verschiedenen Protokollschichten oder Abstraktionsebenen. Ferner wird der Sendezeitpunkt jedes Datenpakets durch einen zugeordneten Zeitstempel protokolliert. Bei der Aufzeichnung der Datenpakete ermöglichen Filter- und Triggerfunktionen eine Reduzierung der Datenmenge. Einfache statistische Auswertungen, z.B. die Anzeige der Adressen der am Bus aktiven Stationen (LiveList) oder die Anzeige von Fehlerzählern, sind auch bei den Systemen des Standes der Technik möglich.

Aus dem U.S.-Patent 5,442,639 und dem U.S.-Patent 5,796,721 sind auch bereits Protokollanalysatoren bekannt, welche den Feldbusverkehr in Echtzeit analysieren können. Auch diese Systeme arbeiten auf der Basis von Filtern, wobei das U.S.-Patent 5,796,721 ein Busmonitor beschreibt, der die Datenpakete von einem Feldbus durch mehrere Filter laufen lassen kann. Die gefilterten Pakete können in Echtzeit dargestellt werden. Gemäß dieser Schrift können die Filterparameter im laufenden Betrieb verändert werden.

US 2005/0027379 A1 beschreibt ein Verfahren zur Ermittlung der Wahrscheinlichkeit eines Ausfalls bei Anforderung eines Systems. Spezieller sind Sicherheitsfunktionen beschrieben, deren Ausfallwahrscheinlichkeit bei Anforderung bestimmt werden soll. Hierzu wird Betriebsinformation einer Sicherheitsfunktions-Komponente erfasst, zum Beispiel Zeit und Datum eines erfolgreich durchgeführten Testes. Abhängig von dieser Betriebsinformation wird eine Ausfallwahrscheinlichkeit bei Anforderung berechnet.

Muskinja N et al.: "Use of TCP/IP protocol in industrial environment", Industrial Technology, 2003 IEEE International Conference on Maribor, Slovenia, Dec. 10-12, 2003, Piscataway, NJ, USA, IEEE, Bd. 2, 10. Dezember 2003 (2003-12-10), Seiten 896-900, ISBN: 0-7803-7852-0, beschreibt die Anwendung des Internet-Protokolls TCP/IP auf Feldbussysteme.

Tae-Eog Lee et al.: "Virtual Control", IEEE Robotics & Automation Magazine, IEEE Service Center, Piscataway, NJ, US, Bd. 11, Nr. 3, September 2004 (2004-09), Seiten 33-49, ISSN: 1070-9932, beschreibt eine Prüfeinrichtung für die Halbleiterherstellung.

Fig. 2 zeigt beispielhaft die Darstellung des Telegrammverkehrs in einem Protokollanalysator des Standes der Technik, ohne jegliche Filterung. Von links nach rechts werden eine Telegrammnummer, einen Zeitstempel, Quell- und Zieladresse und der Telegrammtyp, oder Kommunikationsdienst, angezeigt. Durch Doppelklicken auf ein Telegramm wird dieses im Detail angezeigt und dekodiert. Durch Anlegen von Filtern kann, wie oben erwähnt, die Datenmenge reduziert werden.

Die Protokollanalysatoren des Standes der Technik haben eine Anzahl von Nachteilen, die im folgenden kurz dargestellt sind:
- In industriellen Anwendungen besteht die Forderung nach immer kürzeren Reaktionszeiten, was zu immer höheren Übertragungsgeschwindigkeiten und damit zu immer größeren Datenmengen führt, die auf dem Feldbus übertragen werden. Eine bitgenaue Aufzeichnung führt so zu Datenvolumina von vielen Megabytes pro Sekunde, die nur noch schwer handhabbar sind. Zum Beispiel erzeugt ein PROFIBUS-System bei 12 Mbit/Sec Übertragungsgeschwindigkeit etwa 1 MByte Telegrammdaten pro Sekunde.
- Aufgrund der großen Datenmengen kann der Busverkehr nur abschnittsweise aufgezeichnet werden. Alternativ muß er vorab nach bestimmten Kriterien gefiltert werden. Dadurch können unter Umstände Datenpakete fehlen, die nur in bestimmten Intervallen, wie dem Bus- oder Geräteanlauf, gesendet werden oder die aufgrund voreingestellter Filterkriterien ausgefiltert werden. Solche Datenpakete können jedoch wesentliche Information für die Interpretation des Feldbusverkehrs enthalten.
- Bei dem bekannten System muß der Benutzer die Telegramme interpretieren. Hierzu benötigt er detailliertes Wissen über das Kommunikationsprotokoll des Feldbussystems, das dem Betreiber eines Feldbussystems in der Regel nicht zur Verfügung steht.
- Datenpakete können häufig nur im Kontext der Zustände des sendenden und des empfangenden Busteilnehmers korrekt interpretiert werden. Dieser Kontext ist jedoch weder dem Protokollanalysator noch dem Benutzer bekannt. Dieses Problem kann anhand des Beispiels einer Briefschach-Partie anschaulich gemacht werden: Die Bedeutung des in einem willkürlich herausgegriffenen Brief beschriebenen Schachzugs eröffnet sich nur demjenigen, der den Stand der Partie kennt. Für eine sinnvolle Interpretation muß also die Situation auf dem Schachbrett bekannt sein. In gleicher Weise kann eine sinnvolle Interpretation des Kommunikationsprotokolls des Feldbussystems nur in Kenntnis der Zustände der angeschlossenen Teilnehmer erfolgen. Diese Kenntnis fehlt den bekannten Protokollanalysatoren weitgehend.
- Klassische Busmonitore mit Telegrammaufzeichnung werden in der Regel erst dann eingesetzt, wenn ein Fehler eingetreten ist und dieser analysiert werden soll. Häufig ist es dann schwierig, den Fehler zu reproduzieren. Darüber hinaus erfordert der Anschluß des Busmonitors einen Eingriff in die Anlage, der von dem Anlagenbetreiber häufig abgelehnt wird.

Der Erfindung liegt daher die Aufgabe zugrunde, ein Diagnoseverfahren und eine Diagnoseeinrichtung für ein Feldbussystem anzugeben, die eine kontinuierliche und schritthaltende Zustandsanalyse des Datenverkehrs des Feldbussystems erlaubt.

Diese Aufgabe wird durch ein computer-implementiertes Diagnoseverfahren nach Patentanspruch 1 sowie durch eine Diagnoseeinrichtung nach Patentanspruch 16 gelöst. Bevorzugte Ausführungen der Erfindung sind in den abhängigen Ansprüchen angegeben.

Die Grundidee der Erfindung ist ein Analyseverfahren, bei dem statt einer Aufzeichnung des Datenverkehrs des Feldbussystems, gegebenenfalls mit Filterung, und nachfolgender Offline-Analyse der gespeicherten Datenpakete eine kontinuierliche und schritthaltende Zustandsanalyse des Datenverkehrs in dem Feldbussystem durchgeführt wird. Hierzu wird Wissen über die Zustände der Feldgeräte sowie Protokollwissen genutzt, das in den für die Kommunikation verwendeten Protokollstacks vorhanden ist. Im einzelnen werden die Zustände der Feldgeräte aufgezeichnet, Datenpakete, die zwischen der Steuerung und den Feldgeräten über den Feldbus übertragen werden, werden erfaßt und analysiert, und ein aktualisierter Zustand der Feldgeräte wird abhängig von dem vorhergehenden Zustand des Feldgeräts und dem Inhalt des Datenpakets abgeleitet. Die aktualisierten Zustände der Feldgeräte werden aufgezeichnet, wobei das Erfassen, Analysieren und Aufzeichnen zyklisch wiederholt wird.

Die Erfindung zeichnet somit nicht den Datenverkehr in dem Feldbussystem bitgenau für eine spätere Analyse auf, sondern sie analysiert diesen schritthaltend. Dies bedeutet, daß bereits während des Empfangs eines Datenpakets dessen Inhalt bezüglich seines Informationsgehaltes analysiert und bewertet wird. Daraus wird-die den Benutzer interessierende Information abgeleitet, welche sich auf den Zustand eines Feldgerätes, den Zustand des Feldbusses und/oder den Zustand des gesamten Feldbussystems beziehen kann.

Das beschriebene Diagnoseverfahren kann vorzugsweise als Software-Implementierung in PC-basierten Protokollanalysemodulen sowie in fest in einem Feldbussystem installierten Geräten zur Busüberwachung realisiert werden.

Das erfindungsgemäße Verfahren nutzt die Tatsache, daß Kommunikationsprotokolle häufig formal als Zustandsautomaten spezifiziert und realisiert sind, so daß auch die Erfindung als ein Zustandautomat realisiert werden kann. Ein Zustandsautomat, auch als endlicher Automat oder Zustandsmaschine (state machine) bezeichnet, ist ein Modell des Verhaltens, bestehend aus Zuständen, Zustandsübergängen und Aktionen. Ein Zustand speichert die Information über die Vergangenheit, d.h. er reflektiert die Änderungen der Eingabe seit dem Systemstart bis zum aktuellen Zeitpunkt. Ein Zustandsübergang zeigt die Änderung des Zustands eines Zustandsautomaten an und wird durch logische Bedingungen beschrieben. Eine Aktion ist die Ausgabe des Zustandsautomaten, die in einer bestimmten Situation erfolgt. Demgemäß führt ein empfangenes Datenpaket in Abhängigkeit des internen Zustands des Empfängers, z.B. des Feldgerätes, zu einem neuen internen Zustand und gegebenenfalls zu einer Aktion, z.B. dem Senden einer Antwort oder der Aktivierung einer Gerätefunktion. Dieses Prinzip wird bei dem erfindungsgemäßen Verfahren auch für die Diagnose des Feldbussystems angewendet, wobei im Unterschied zu einem normalen Busteilnehmer, d.h. der Steuerung und den Feldgeräten, die Diagnosekomponente vorzugsweise alle auf dem Bus vorhandenen Datenpakete erfaßt und-die Zustände aller Busteilnehmer nachbildet. Das erfindungsgemäße Diagnoseverfahren wird vorzugsweise durch eine Software realisiert. Diese Software verhält sich somit im Prinzip wie der Empfänger eines Datenpakets und kann dessen interne Zustände und Reaktionen (Aktionen) nachbilden. Die Diagnosesoftware sollte dies jedoch separat für jeden Teilnehmer in dem Feldbussystem, insbesondere für jedes Feldgerät, tun und benötigt hierzu jeweils eine Instanzierung der Zustandsdaten der Teilnehmer des Feldbussystems.

Erfindungsgemäß wird somit die aus der Analyse der Datenpakete gewonnene Information mit dem letzten bekannten Zustand des sendenden und des empfangenden Geräts abgeglichen. Daraus wird gegebenenfalls ein neues Zustandsbild der betroffenen Busteilnehmer abgeleitet. Somit ist es möglich, daß das erfindungsgemäße Diagnoseverfahren stets ein aktuelles Bild des Zustands der Busteilnehmer, d.h. der Feldgeräte, des Feldbusses und der Steuerung pflegt. Dieses "Bild" wird beispielsweise durch einen Zustandvektor realisiert, welcher die feldbusspezifischen Zustände oder Kommunikationszustände der Busteilnehmer, d.h. insbesondere der Feldgeräte und der Steuerung(en) wiedergibt.

Die Erfassung und Aufzeichnung der Zustandsinformation in dem Zustandsvektor bildet den auf dem Feldbus nicht übertragenen Kontext, der für die Interpretation der Datenpakete essentiell ist. Ferner stellt der Zustandsvektor die aktuelle Zustandsinformation des Feldbussystems und somit die einen Benutzer eigentlich interessierende Information dar.

In der bevorzugten Ausführung der Erfindung wird der Zustandsvektor zyklisch erzeugt und enthält die Zustandsinformation des Feldbusses und aller Busteilnehmer. Bei Bussystemen, die zyklisch arbeiten, wie PROFIBUS-DP, wird pro Buszyklus ein neuer Zustandsvektor erzeugt. In anderen Fällen kann der Zyklus der Zustandsbeobachtung, -erfassung und -analyse von einem Benutzer vorgegeben werden.

Das erfindungsgemäße Verfahren der Zustandserfassung und -beobachtung ermöglicht es die Information aufgrund des Paketverkehrs zu verdichten und auf den Informationsgehalt zu reduzieren, der den Benutzer tatsächlich interessiert. Dadurch kann der Datenverkehr in dem Feldbussystem über lange Zeiträume beobachtet werden, ohne daß ein Datenverlust auftritt.

Die Informationsverdichtung ergibt sich auch daraus, daß zyklische Protokolle eine hohe-Informationsredundanz aufweisen. Ein bestimmter Prozeßwert wird möglicherweise Tausende Male übertragen, ohne daß er sich ändert. Jedes Kommunikationsprotokoll enthält darüber hinaus eine Fülle von Datenpaketen, welche die Steuerung des Protokolls vornehmen, aber im Sinne der Anwendung nicht informationstragend sind. Solche Datenpakete müssen nicht aufgezeichnet werden, sie können jedoch statisch ausgewertet werden und im Fehlerfall wertvolle Hinweise geben. Erfindungsgemäß ist daher vorgesehen, die Datenpakete in Bezug auf Telegrammwiederholungen, Fehlermeldungen und/oder Zustandsänderungen der Busteilnehmer zu analysieren und die Häufigkeit dieser Telegrammwiederholungen, Fehlermeldungen oder Zustandsänderungen zu erfassen und statistisch auszuwerden. Dies erlaubt es insbesondere eine mögliche Verschlechterung des Feldbussystems frühzeitig zu erkennen.

Grundsätzlich arbeitet das erfindungsgemäße Diagnoseverfahren passiv; es nimmt also nicht aktiv an dem Datenverkehr auf dem Feldbus teil. In einer Ausführung der Erfindung kann jedoch auch vorgesehen sein, daß eine aktive Abfrage von Information durch aktives Senden eines Datenpakets durch das Diagnosesystem erfolgt. Dies ist dann zweckmäßig, wenn bestimmte Zustandsinformation durch reine Beobachtung nicht gewonnen werden kann, wie im Falle von Daten, die nur während des Anlaufs des Systems übertragen werden, wenn dieser Anlauf nicht beobachtet werden konnte.

Das erfindungsgemäße Diagnoseverfahren bzw. die Diagnoseeinrichtung können als feste Bestandteile eines Feldbussystems integriert werden, so daß es nicht notwendig ist, sie erst im Fehlerfall anzuschließen. Dies würde in der Praxis häufig Schwierigkeiten bereiten, weil es von dem Anlagenbetreiber wegen einer möglichen Beeinflussung der Anlage abgelehnt werden könnte.

Das erfindungsgemäße Diagnoseverfahren kann sowohl ein aktuelles Bild des Feldbussystems liefern als auch eine vollständige oder teilweise Historie des Betriebs erfassen und speichern und kann damit wesentlich mehr Information gewinnen, als dies mit einer kurzfristigen Telegrammaufzeichnung möglich ist. Dabei kann erfindungsgemäß vorgesehen sein, nur die aktuellen Zustände oder sowohl die aktuellen Zustände als auch deren Historie aufzuzeichnen. Ferner können die Telegrammaufzeichnungen zusätzlich zu den Zustandsvektoren gespeichert werden, wenn dies für eine Detailanalyse erforderlich scheint.

Die Erfindung erlaubt es, durch Langzeitbeobachtungen_Fehlertrends frühzeitig zu erkennen. Die Fehlererkennung erfolgt insbesondere durch Analyse der Datenpakete in bezug auf Telegrammwiederholungen, Fehlermeldungen und Zustandsänderungen der Busteilnehmer. Dem liegt die Erkenntnis zugrunde, daß selbst physikalische Fehler, die beispielsweise durch Korrosion von Kontakten entstehen, aufgrund der allmählichen Verschlechterung der Übertragungsgüte zunächst nur zu einzelnen fehlerhaften Datenpakete führen, die sich aufgrund von Protokolleigenschaften, wie Informationsredundanz oder Telegrammwiederholung, nicht schädlich auswirken, die aber durch geeignete Diagnosemaßnahmen und statistisch erfaßt werden können. Ein Beispiel hierfür ist das Zählen von Telegrammwiederholungen, wobei ein gehäuftes Auftreten von Telegrammwiederholungen innerhalb einer bestimmten Zeitspanne eine Verschlechterung des Übertragungsmediums anzeigen kann.

Die Erfindung ist im folgenden anhand bevorzugter Ausführungen mit Bezug auf die Zeichnungen näher erläutert. In den Figuren zeigen:
- Fig. 1: eine schematische Bilddarstellung eines Feldbussystems gemäß dem Stand der Technik;
- Fig. 2: ein Bildschirmausdruck zur Darstellung von Datenpaketen, die in einem klassischen Protokollanalysator ausgewertet werden;
- Fig. 3: ein Ablaufdiagramm zur Darstellung des Verfahrens gemäß der Erfindung; und
- Fig. 4: ein Bildschirmausdruck zur Darstellung der Zustandsinformation in der erfindungsgemäße Diagnoseeinrichtung.

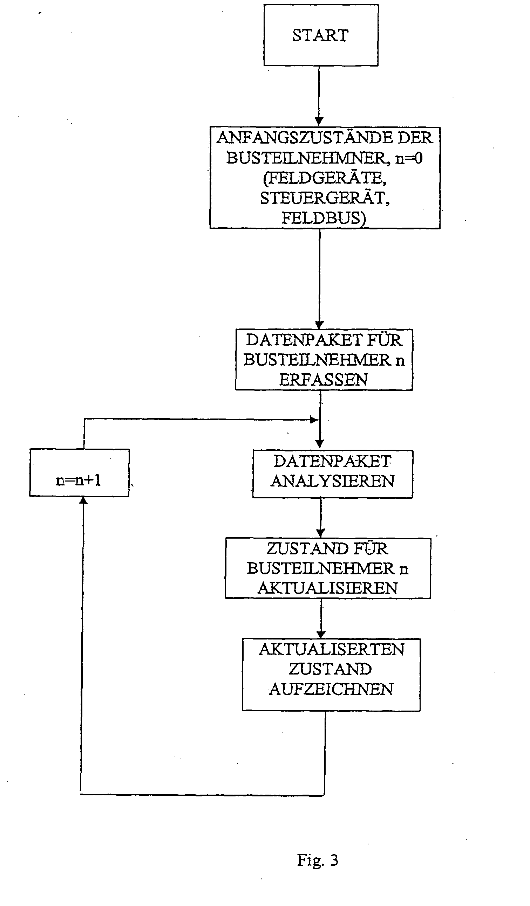

Der Grundaufbau des erfindungsgemäßen Diagnoseverfahrens ist in Fig. 3 gezeigt. Bei dem Verfahren der Erfindung werden zunächst Anfangszustände des Feldbussystems festgehalten, wobei in einem potentiellen Anfangszustand das gesamte Feldbussystem heruntergefahren ist, die angeschlossenen Feldgeräte weder bekannt noch konfiguriert sind und keine Verbindung aufgebaut ist. Das erfindungsgemäße Diagnoseverfahren kann jedoch auch während des laufenden Betriebs des Feldbussystems einsetzen, wobei es dann-gegebenenfalls fehlende Information über die Zustände der Busteilnehmer aktiv abfragen kann. Beispiele für Zustände von Feldgeräten und gerätespezifische Information, welche das erfindungsgemäße Diagnosesystem ermitteln und aktualisieren kann, sind:
- Geräteadresse;
- Gerätetyp;
- Gerät läuft an;
- Gerät läuft im stationären Betrieb;
- Gerät fährt herunter;
- Gerät fällt aus;
- Gerät ist/wird falsch parametriert oder konfiguriert;
- Gerät sendet Betriebszustand;
- Gerät sendet Alarm oder Fehlermeldung;
- Ein-/Ausgabedaten des Geräts.

Beispiele für Zustandsinformation, die sich auf den Feldbus und dessen Verbindung zu den Busteilnehmern bezieht, sind:
- Verbindungszustand (aufgebaut, abgebaut);
- Verbindungseigenschaften, z. B. zyklisch, azyklisch, logische Kanalnummer

Beispiele für Zustände, welche busspezifische Information wiedergeben, sind:
- Busparameter, wie Übertragungsgeschwindigkeit, Leitungslänge, Übertragungsverfahren, Topologie, Prioritäten;
- Zeitparameter, wie Zykluszeiten, Pausenzeiten;
- Fehlerstatistiken, wie Telegrammwiederholungen, fehlerhafte Telegramme.

In der in Fig. 3 gezeigten Ausführung wird das erfindungsgemäße Diagnoseverfahren als Busanalysator verwendet. Es ist als ein Programm realisiert, das beispielsweise auf einem tragbaren PC läuft und im Bedarfsfall mit dem Feldbus verbunden werden kann. Beispielsweise wird es von Inbetriebnahme- und Servicepersonal zur Überprüfung von Feldbussystemen und zur Fehlersuche in Feldbussystemen verwendet. Bei dem Verfahren werden, wie oben erwähnt, zunächst die Anfangszustände der Busteilnehmer ermittelt. Dann werden nacheinander die Datenpakete für sämtliche Busteilnehmer erfaßt und analysiert. In Kenntnis des vorhergehenden Zustands für den jeweiligen Busteilnehmer sowie des zugehörigen Datenpakets kann der Zustand für den jeweiligen Busteilnehmer aktualisiert werden. Die aktualisierten Zustände werden aufgezeichnet. Dadurch ist zunächst eine einfache Klassifizierung der Zustände in Kategorien wie "störungsfreier Betrieb", "Unregelmäßigkeiten im Betrieb" und "Fehler aufgetreten" möglich. Die Darstellung dieser Zustände kann beispielsweise farblich in Form einer Ampelfunktion mit Zuordnung der Farben Grün, Gelb und Rot zu den jeweiligen Busteilnehmern erfolgen. Dadurch erhält ein Benutzer eine einfache und anschauliche Übersicht über die Funktion seines Feldbussystems, ohne daß er irgendwelche Datenpakete analysieren müßte. Mit dem erfindungsgemäßen Verfahren ist auch ein Soll-Ist-Vergleich möglich, bei dem der erwartete Idealzustand des Feldbussystems mit dem realen Systemzustand verglichen wird und Abweichungen angezeigt werden. Typische Zustandsinformation für diese Anwendung sind:
- Liste der am Feldbus aktiven Feldgeräte;
- Betriebszustände der Feldgeräte, wie Anlauf, Herunterfahren, in Betrieb, Fehler aufgetreten, nicht oder falsch konfiguriert;
- Ein-/Ausgabedaten der Feldgeräte, nach Möglichkeit gerätespezifisch aufbereitet;
- Informationen zu den Feldgeräten, wie Hersteller, Typ;
- Statistische Information, wie Anzahl gestörter Datenpakete, Anzahl der Neuanläufe, Anzahl der Alarmmeldung.

Nicht alle dieser Informationen sind aus den Datenpaketen (Telegrammen) allein dekodierbar. Beispielsweise die Ein-/Ausgabedaten der Feldgeräte werden als unformatierte Bytefolge übertragen, wobei die Semantik der Bytefolge gerätespezifisch ist. Eine semantisch korrekte Darstellung ist nur möglich, wenn eine Beschreibung der Gerätestruktur verfügbar ist. Solche Beschreibungen sind für praktisch alle Feldbusse als "Gerätebeschreibungdatei" (electronic device description) definiert.

Zur Auswertung der Ein-/Ausgabedaten der Feldgeräte sieht die Erfindung in einer Ausführung vor, für jeden Gerätetyp eine eindeutige Typkennung zu vergeben, über die die zugehörige Gerätebeschreibungsdatei referenziert werden kann. Die Diagnoseeinrichtung kann dann das notwendige Wissen zur semantisch korrekten Darstellung z.B. der Ein-/Ausgabedaten oder der Alarmmeldung aus dieser Datei gewinnen.

Diese Art der Analyse der Datenpakete ist an dem Beispiel einer Motorsteuerung veranschaulicht: Bestimmte Bits der Eim-/Ausgabedaten bedeuten z.B. "Ein" oder "Aus", "Rechtslauf" oder "Linkslauf"; andere Bits zeigen an, daß ein Alarmtelegramm vorliegt. Innerhalb eines Alarmtelegramms können wiederum bestimmte Bits "Strombegrenzung aktiv" oder "maximale Betriebstemperatur überschritten" bedeuten. Die Diagnoseeinrichtung kann somit den Zustand eines Motorsteuergeräts anstelle in der Binärdarstellung "01100010" im Klartext "Motor an, Linkslauf' darstellen.

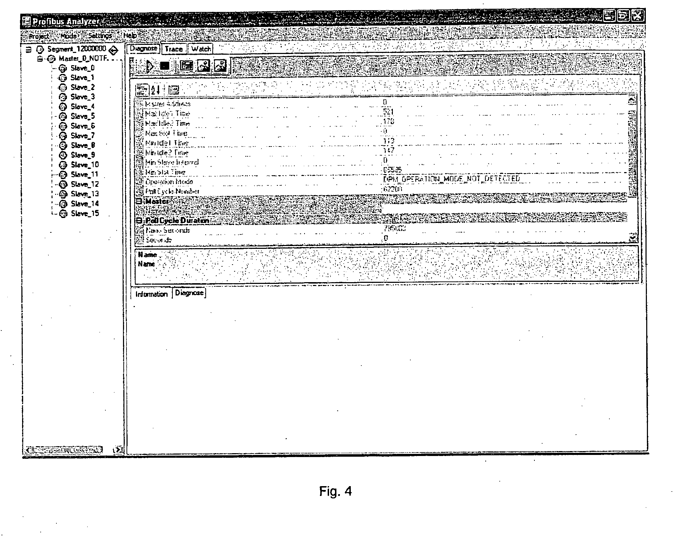

Fig. 4 zeigt einen Bildschirmausdruck zur Darstellung der Zustandsinformation in der erfindungsgemäßen Diagnoseeinrichtung. Der Baum auf der linken Seite der Figur zeigt ein PROFIBUS-Segment, also das Feldbussystem, in dem ein Master (Steuerung) existiert, dem wiederum eine Reihe von Slaves (Feldgeräten) zugeordnet sind. Jeder Komponente, d.h. dem eigentlichen Feldbus, der Steuerung und den Feldgeräten ist eine "Ampel" zugeordnet, wobei durch die Darstellung mit Ampelfarben der Systemzustand auf einen Blick erfaßbar ist. Auf der rechten Seite der Darstellung können die Zustandsdaten jeweils einer Komponente detailliert angezeigt werden.

In einer weiteren Ausführung der Erfindung wird die Diagnoseeinrichtung hauptsächlich zur statistischen Langzeitbeobachtung des Feldbussystems verwendet. Dazu wird das erfindungsgemäße Diagnoseverfahren in- einem fest im Feldbussystem installierten Diagnosegerät eingesetzt, und es werden überwiegend die Änderungen bestimmter Elemente des Zustandsvektors betrachtet, welche auf Fehlfunktionen hinweisen können. Diese Elemente sind beispielsweise:
- Änderungen in der Anzahl der aktiven Feldgeräte, die auf den Ausfall einzelner Geräte hinweisen können;
- Das Auftreten, Zunehmen oder Abnehmen von Telegrammwiederholungen, das auf eine Verschlechterung oder Verbesserung der Leitungs- oder Signalqualität hinweisen kann;
- Ein wiederholtes Auftreten von Neuanlauf und/oder Neuparametrierung der Feldgeräte, was auf einen sporadischen Gerätausfall hinweisen kann;
- Das Auftreten und insbesondere die Häufung von Alarmmeldungen.

In dieser Ausführung des erfindungsgemäßen Diagnoseverfahrens wird somit der Zustandsvektor, der die Zustände der Busteilnehmer wiedergibt, auf bestimmte Elemente hin gefiltert und statistisch ausgewertet. Durch die Überwachung dieser Zustandsinformationen können Verschlechterungen frühzeitig erkannt und durch präventive Wartung ein Anlagenstillstand vermieden werden. Hierdurch können insbesondere Produktionsausfälle vermieden werden.

In einer weiteren Ausführung der Erfindung wird die Diagnoseeinrichtung vornehmlich zur Visualisierung der Prozeßabläufe und zur Bewertung des Feldbussystems insgesamt eingesetzt. Wie in Fig. 1 dargestellt, verbinden die Feldbussysteme in der Regel eine zentrale Steuerung mit Feldgeräten, wie Ein-/Ausgabebaugruppen, Sensoren, Steuerungen und dergleichen zur Prozeßanbindung. Die Kommunikation erfolgt beispielsweise zyklisch zwischen der Steuerung und den anderen Busteilnehmern. Ein Zugriff auf die übertragenen Daten zum Zweck der Visualisierung oder Protokollierung wäre ohne ein Diagnosegerät nur über die Steuerung möglich, an die jedoch nicht beliebige Fremdsysteme anbindbar sind. Das erfindungsgemäße Diagnoseverfahren kann daher auch dazu verwendet werden, durch passives Mithören Daten zu erfassen, um sie visuell darzustellen oder zu protokollieren.

Das erfindungsgemäße Diagnoseverfahren kann auch zum "Asset Management" oder "Asset Monitoring" eingesetzt, um an zentraler Stelle Anlagedaten und Betriebsparameter zu erfassen, auszuwerten und zu speichern. Hierbei können vollständige Inventarlisten der Busteilnehmer-sowie eine Bewertung ihrer Funktionsfähigkeit erstellt werden. Das erfindungsgemä-βe Verfahren kann dies durch bloßes "Mithören"des Datenverkehrs auf dem Feldbus realisieren, ohne daß die vorhandene Kommunikationsstruktur verändert werden muß.

## Patentansprüche

1. Computerimplementiertes Diagnoseverfahren für ein Feldbussystem, in dem Busteilnehmer (10-18) über einen Feldbus (20) Daten gemäß einem vorgegebenen Kommunikationsprotokoll austauschen, wobei der Datenaustausch in Form von Datenpaketen erfolgt, mit den Verfahrensschritten:
a) Aufzeichnen von Zuständen der Busteilnehmer (10-18);
b) Erfassen eines Datenpakets, das zwischen den Busteilnehmern (10-18) über den Feldbus (20) übertragen wird;
c) Analysieren des Datenpakets hinsichtlich seines Informationsgehaltes und
d) Ableiten eines aktualisierten Zustands der Busteilnehmer (10-18) abhängig von dem vorhergehenden Zustand der Busteilnehmer (10-18) und dem Informationsgehalt des Datenpakets;
e) Aufzeichnen der aktualisierten Zuständen der Busteilnehmer (10-18); und
f) Wiederholen der Schritte (b) bis (e), um die aktuellen Zustände der Busteilnehmer (10-18) Schritt haltend zu erfassen,
g) wobei das Diagnoseverfahren das Verhalten der Busteilnehmer, deren interne Zustände und Aktionen nachbildet, um den aktualisierten Zustand der Busteilnehmer abzuleiten.

2. Diagnoseverfahren nach Anspruch 1, **dadurch gekennzeichnet, dass** die Zustände der Busteilnehmer (10-18) in einem Zustandvektor aufgezeichnet werden.

3. Diagnoseverfahren nach Anspruch 2, **dadurch gekennzeichnet, dass** der Zustandsvektor zyklisch erzeugt wird.

4. Diagnoseverfahren nach Anspruch 3, **dadurch gekennzeichnet, dass** das Feldbussystem zyklisch arbeitet und in jedem Buszyklus ein Zustandsvektor erzeugt wird.

5. Diagnoseverfahren nach Anspruch 3, **dadurch gekennzeichnet, dass** der Zyklus der Erzeugung des Zustandsvektors von einem Benutzer vorgegeben wird.

6. Diagnoseverfahren nach einem der vorangehenden Ansprüche, **dadurch gekennzeichnet, dass** im Schritt (c) auch der aktualisierte Zustand des Feldbusses (20) abgeleitet und im Schritt (d) der aktualisierte Zustand des Feldbusses (20) aufgezeichnet wird.

7. Diagnoseverfahren nach den Ansprüchen 2 und 6, **dadurch gekennzeichnet, dass** der aktualisierte Zustand des Feldbusses (20) in dem Zustandsvektor aufgezeichnet wird.

8. **Diagnoseverfahren nach einem der vorangehenden Ansprüche, dadurch gekennzeichnet, dass** in Schritt (e) die aktuellen Zustände der Busteilnehmer (10-18) kontinuierlich erfasst werden.

9. Diagnoseverfahren nach einem der vorangehenden Ansprüche, **dadurch gekennzeichnet, dass** die Busteilnehmer (10-18) Feldgeräte (12-18) und wenigstens eine Steuerung (10) umfassen und im Schritt (e) die aktuellen Zustände aller Feldgeräte (12-18) erfasst werden.

10. Diagnoseverfahren nach einem der vorangehenden Ansprüche, **dadurch gekennzeichnet, dass** ein Datenpaket von einem Diagnosegerät an wenigstens einen Busteilnehmer (10-18) gesandt wird und ein aktualisierter Zustand des wenigstens einen Busteilnehmers (10-18) abhängig von einem Antwort-Datenpaket, welches der Busteilnehmer (10-18) sendet, abgeleitet wird.

11. Diagnoseverfahren nach einem der vorangehenden Ansprüche, **dadurch gekennzeichnet, dass** die aktualisierten Zustände der Busteilnehmer (10-18) angezeigt werden.

12. Diagnoseverfahren nach einem der vorangehenden Ansprüche, **dadurch gekennzeichnet, dass** die Datenpakete in Bezug auf Ein- und/oder Ausgabedaten der Busteilnehmer (10-18) analysiert werden.

13. Diagnoseverfahren nach Anspruch 12, **dadurch gekennzeichnet, dass** die Ein- und/oder Ausgabedaten angezeigt werden.

14. Diagnoseverfahren nach einem der vorangehenden Ansprüche, **dadurch gekennzeichnet, dass** die Datenpakete in Bezug auf Telegrammwiederholungen, fehlerhafte Datenpakete und/oder Zustandsänderungen der Busteilnehmer (10-18) analysiert werden.

15. Diagnoseverfahren nach Anspruch 14, **dadurch gekennzeichnet, dass** die Häufigkeit der Telegrammwiederholungen, der fehlerhaften Datenpakete und/oder der Zustandsänderungen erfasst und statistisch ausgewertet wird.

16. Diagnoseeinrichtung für ein Feldbussystem, in dem Busteilnehmer (10-18) über einen Feldbus (20) Daten gemäß einem vorgegebenen Kommunikationsprotokoll austauschen, wobei der Datenaustausch in Form von Datenpaketen erfolgt, mit:
Mitteln zum Aufzeichnen von Zuständen der Busteilnehmer (10-18);
Mitteln zum Erfassen von Datenpaketen, die zwischen den Busteilnehmern (10-18) über den Feldbus (20) übertragen werden; und
Mitteln zum Analysieren der Datenpakete hinsichtlich ihres Informationsgehaltes und Ableiten von aktualisierten Zuständen der Busteilnehmer (10-18) abhängig von den vorhergehenden Zuständen der Busteilnehmer (10-18) und dem Informationsgehalt der Datenpakete;
wobei die Mittel zum Aufzeichnen von Zuständen der Busteilnehmer (10-18) dazu eingerichtet sind, aktualisierte Zustände Schritt haltend aufzuzeichnen, und wobei die Mittel zum Analysieren der Datenpakete dazu eingerichtet sind, das Verhalten der Busteilnehmer, deren interne Zustände und Aktionen nachzubilden, um die aktualisierten Zustände der Busteilnehmer abzuleiten.

17. Diagnoseeinrichtung nach Anspruch 16, **dadurch gekennzeichnet, dass** die Mittel zum Aufzeichnen von Zuständen der Busteilnehmer (10-18) einen Speicher zum Speichern von Zustandsvektoren aufweisen.

18. Diagnoseeinrichtung nach Anspruch 16 oder 17, **dadurch gekennzeichnet, dass** die Mittel zum Aufzeichnen von Zuständen der Busteilnehmer (10-18), die Mitteln zum Erfassen von Datenpaketen, und die Mittel zum Analysieren der Datenpakete und Ableiten von aktualisierten Zuständen der Busteilnehmer (10-18) dazu eingerichtet sind, zyklisch zu arbeiten.

19. Diagnoseeinrichtung nach einem der Ansprüche 16 bis 18, **dadurch gekennzeichnet, dass** die Mittel zum Analysieren der Datenpakete dazu eingerichtet sind, auch einen aktualisierten Zustand des Feldbusses (20) abzuleiten; und die Mittel zum Aufzeichnen von Zuständen der Busteilnehmer (10-18) dazu eingerichtet sind, auch den aktualisierten Zustand des Feldbusses (20) aufzuzeichnen.

20. Diagnoseeinrichtung nach einem der Ansprüche 16 bis 19, **gekennzeichnet durch** Mittel zum Senden eines Datenpakets an wenigstens ein Feldgerät, das ein Busteilnehmer (10-18) ist, wobei die Mittel zum Analysieren der Datenpakete dazu eingerichtete sind, den aktualisierten Zustand des Feldgerätes (12-18) abhängig von einem Antwort-Datenpaket abzuleiten, welches das Feldgerät sendet.

21. Diagnoseeinrichtung nach einem der Ansprüche 16 bis 20, **gekennzeichnet durch** eine Anzeige zum Anzeigen der aktualisierten Zustände der Busteilnehmer (10-18).

22. Diagnoseeinrichtung nach einem der Ansprüche 16 bis 21, **dadurch gekennzeichnet, dass** die Mittel zum Analysieren der Datenpakete dazu eingerichtet sind, die Datenpakete in bezug auf Ein- und/oder Ausgabedaten der Busteilnehmer (10-18) zu analysieren.

23. Diagnoseeinrichtung nach einem der Ansprüche 16 bis 22, **dadurch gekennzeichnet, dass** die Mittel zum Analysieren der Datenpakete dazu eingerichtet sind, die Datenpakete in Bezug auf Telegrammwiederholungen, fehlerhafte Datenpakete und/oder Zustandsänderungen der Busteilnehmer (10-18) zu analysieren.

24. Diagnoseeinrichtung nach Anspruch 23, **gekennzeichnet durch** Mittel zum Erfassen und statistischen Auswerten der Häufigkeit der Telegrammwiederholungen, der fehlerhaften Datenpakete und/oder der Zustandsänderungen, um eine mögliche Verschlechterung des Busses oder der Busteilnehmer (10-18) zu erfassen.

25. Diagnoseeinrichtung nach einem der Ansprüche 16 bis 24, **dadurch gekennzeichnet, dass** sie in einer eigenständigen Geräteeinheit realisiert ist, die an den Feldbus (20) zum Zweck der Analyse des Feldbussystems vorübergehend anschließbar ist.

26. Diagnoseeinrichtung nach einem der Ansprüche 16 bis 24, **dadurch gekennzeichnet, dass** sie in das Feldbussystems fest integriert ist.

## Claims

1. Computer-implemented diagnostic method for a field bus system in which bus users (10-18) exchange data via a field bus (20) in accordance with a predetermined communication protocol, the data being exchanged in the form of data packets, comprising the following procedural steps:
a) recording states of the bus users (10-18);
b) detecting a data packet which is transmitted between the bus users (10-18) via the field bus (20);
c) analyzing the data packet with respect to its information content and
d) deriving a current state of the bus users (10-18) dependent on the previous state of the bus users (10-18) and the information content of the data packet;
e) recording the current states of the bus users (10-18); and
f) repeating steps (b) to (e) in order to detect the current states of the bus users (10-18) in an ongoing manner,
g) wherein the diagnostic method simulates the conduct of the bus users, their internal states and actions, in order to derive the current state of the bus users.

2. Diagnostic method according to claim 1, **characterized in that** the states of the bus users (10-18) are recorded in a state vector.

3. Diagnostic method according to claim 2, **characterized in that** the state vector is generated cyclically.

4. Diagnostic method according to claim 3, **characterized in that** the field bus system operates cyclically and a state vector is generated in each bus cycle.

5. Diagnostic method according to claim 3, **characterized in that** the cycle of generation of the state vector is specified by a user.

6. Diagnostic method according to any of the preceding claims, **characterized in that** in step (c), the current state of the field bus (20) is also derived and in step (d), the current state of the field bus (20) is recorded.

7. Diagnostic method according to any of claims 2 to 6, **characterized in that** the current state of the field bus (20) is recorded in the state vector.

8. Diagnostic method according to any of the preceding claims, **characterized in that** in step (e), the current states of the bus users (10-18) are detected continuously.

9. Diagnostic method according to any of the preceding claims, **characterized in that** the bus users (10-18) comprise field devices (12-18) and at least one controller (10) and in step (e), the current states of all field devices (12-18) are detected.

10. Diagnostic method according to any of the preceding claims, **characterized in that** a data packet is sent from a diagnostic device to at least one bus user (10-18) and a current state of the at least one bus user (10-18) is derived dependent on a response data packet which is sent by the bus user (10-18).

11. Diagnostic method according to any of the preceding claims, **characterized in that** the current states of the bus users (10-18) are displayed.

12. Diagnostic method according to any of the preceding claims, **characterized in that** the data packets are analyzed with respect to input and/or output data of the bus users (10-18).

13. Diagnostic method according to claim 12, **characterized in that** the input and/or output data is displayed.

14. Diagnostic method according to any of the preceding claims, **characterized in that** the data packets are analyzed with respect to telegram repetitions, faulty data packets and/or state changes of the bus users (10-18).

15. Diagnostic method according to claim 14, **characterized in that** the frequency of the telegram repetitions, the faulty data packets and/or the state changes are detected and statistically evaluated.

16. Diagnostic device for a field bus system in which bus users (10-18) exchange data via a field bus (20) in accordance with a predetermined communication protocol, the data being exchanged in the form of data packets, comprising:
means for recording states of the bus users (10-18);
means for detecting data packets which are transmitted between the bus users (10-18) via the field bus (20); and
means for analyzing the data packets with respect to their information content and deriving current states of the bus users (10-18) dependent on the preceding states of the bus users (10-18) and the information content of the data packets;
wherein the means for recording states of the bus users (10-18) are configured for recording current states in an ongoing manner, and wherein the means for analyzing the data packets are configured for simulating the conduct of the bus users, their internal states and actions, in order to derive the current states of the bus users.

17. Diagnostic device according to claim 16, **characterized in that** the means for recording states of the bus users (10-18) comprise a memory for storing state vectors.

18. Diagnostic device according to claim 16 or 17, **characterized in that** the means for recording states of the bus users (10-18), the means for detecting data packets and the means for analyzing the data packets and deriving of current states of the bus users (10-18) are configured for operating cyclically.

19. The diagnostic device according to any of claims 16 to 18, **characterized in that** the means for analyzing the data packets are configured to also derive a current state of the field bus (20); and the means for recording of states of the bus users (10-18) are configured to also record the current state of the field bus (20).

20. Diagnostic device according to any of claims 16 to 19, **characterized by** means for sending a data packet to at least one field device, which is a bus user (10-18), wherein the means for analyzing the data packets are configured to derive the current state of the field device (12-18) dependent on a response packet, which is sent by the field device.

21. Diagnostic device according to any of claims 16 to 20, **characterized by** a display for displaying the current states of the bus users (10-18).

22. Diagnostic device according to any of claims 16 to 21, **characterized in that** the means for analyzing the data packets are configured for analyzing the data packets with respect to input and/or output data of the bus users (10-18).

23. Diagnostic device according to any of claims 16 to 22, **characterized in that** the means for analyzing the data packets are configured for analyzing the data packets with respect to telegram repetitions, faulty data packets and/or state changes of the bus users (10-18).

24. Diagnostic device according to claim 23, **characterized by** means for detecting and statistically evaluating the frequency of the telegram repetitions, the faulty data packets and/or the state changes, in order to detect a possible deterioration of the busses of the bus users (10-18).

25. Diagnostic device according to any of claims 16 to 24, **characterized in that** it is implemented in an independent device unit, which is temporarily connectable to the field bus (20) for the purpose of the analysis of the field bus system.

26. Diagnostic device according to any of claims 16 to 24, **characterized in that** it is fixedly integrated into the field bus system.

## Revendications

1. Procédé de diagnostic mis en oeuvre par ordinateur pour un système de bus de terrain, dans lequel des participants au bus (10-18) échangent par l'intermédiaire d'un bus de terrain (20) des données selon un protocole de communication prédéfini, l'échange de données s'effectuant sous forme de paquets de données, comportant les étapes suivantes:
a) enregistrement d'états des participants au bus (10-18);
b) acquisition d'un paquet de données, qui est transmis entre les participants au bus (10-18) par l'intermédiaire du bus de terrain (20);
c) analyse du paquet de données, pour ce qui concerne sa quantité d'information, et
d) obtention d'un état actualisé des participants au bus (10-18) en fonction de l'état précédent des participants au bus (10-18) et de la quantité d'information du paquet de données;
e) enregistrement des états actualisés des participants au bus (10-18); et
f) répétition des étapes (b) à (e), pour acquérir en temps réel les états actuels des participants au bus (10-18),
g) le procédé de diagnostic simulant le comportement des participants au bus, leurs états internes et leurs actions, pour obtenir à partir de là l'état actualisé des participants au bus.

2. Procédé de diagnostic selon la revendication 1, **caractérisé en ce que** les états des participants au bus (10-18) sont enregistrés dans un vecteur d'état.

3. Procédé de diagnostic selon la revendication 2, **caractérisé en ce que** le vecteur d'état est produit d'une manière cyclique.

4. Procédé de diagnostic selon la revendication 3, **caractérisé en ce que** le système de bus de terrain fonctionne d'une manière cyclique, et un vecteur d'état est produit dans chaque cycle du bus.

5. Procédé de diagnostic selon la revendication 3, **caractérisé en ce que** le cycle de production du vecteur d'état est prédéfini par un utilisateur.

6. Procédé de diagnostic selon l'une des revendications précédentes, **caractérisé en ce que**, dans l'étape (c), on obtient aussi l'état actualisé du bus de terrain (20) et, dans l'étape (d), on enregistre l'état actualisé du bus de terrain (20).

7. Procédé de diagnostic selon les revendications 2 et 6, **caractérisé en ce que** l'état actualisé du bus de terrain (20) est enregistré dans le vecteur d'état.

8. Procédé de diagnostic selon l'une des revendications précédentes, **caractérisé en ce que**, dans l'étape (e), les états actuels des participants au bus (10-18) sont acquis en continu.

9. Procédé de diagnostic selon l'une des revendications précédentes, **caractérisé en ce que** les participants au bus (10-18) comprennent des appareils de terrain (12-18) et au moins une unité de commande (10), et dans l'étape (e) sont acquis les états actuels de la totalité des appareils de terrain (12-18).

10. Procédé de diagnostic selon l'une des revendications précédentes, **caractérisé en ce qu'**un paquet de données est envoyé à partir d'un appareil de diagnostic à au moins un participant au bus (10-18), et un état actualisé du ou des participants au bus (10-18) est obtenu à partir d'un paquet de données en réponse, émis par le participant au bus (10-18).

11. Procédé de diagnostic selon l'une des revendications précédentes, **caractérisé en ce que** l'état actualisé des participants au bus (10-18) est affiché.

12. Procédé de diagnostic selon l'une des revendications précédentes, **caractérisé en ce que** les paquets de données sont analysés par référence à des données d'entrée et/ou de sortie des participants au bus (10-18).

13. Procédé de diagnostic selon la revendication 12, **caractérisé en ce que** les données d'entrée et/ou de sortie sont affichées.

14. Procédé de diagnostic selon l'une des revendications précédentes, **caractérisé en ce que** les paquets de données sont analysés par référence aux corrections automatiques d'erreur, aux paquets de données défectueux et/ou aux modifications d'état des participants au bus (10-18).

15. Procédé de diagnostic selon la revendication 14, **caractérisé en ce que** la fréquence des corrections automatiques d'erreur, des paquets de données défectueux et/ou des modifications d'état, est acquise et soumise à une évaluation statistique.

16. Dispositif de diagnostic pour un système de bus de terrain, dans lequel des participants au bus (10-18) échangent par l'intermédiaire d'un bus de terrain (20) des données selon un protocole de communication prédéfini, l'échange de données s'effectuant sous forme de paquets de données, comprenant:
des moyens pour enregistrer des états des participants au bus (10-18);
des moyens pour acquérir des paquets de données, qui sont transmis entre les participants au bus (10-18) par l'intermédiaire du bus de terrain (20); et
des moyens pour analyser les paquets de données pour ce qui concerne leur teneur en information, et
obtention des états actualisés des participants au bus (10-18) en fonction des états précédents des participants au bus (10-18) et de la teneur en information des paquets de données; les moyens pour l'enregistrement des états des participants au bus (10-18) étant arrangés dans le but d'enregistrer en temps réel des états actualisés, et les moyens pour analyser les paquets de données étant arrangés de façon à simuler le comportement des participants au bus, leurs états internes et leurs actions, pour obtenir à partir de là les états actualisés des participants au bus.

17. Dispositif de diagnostic selon la revendication 16, **caractérisé en ce que** les moyens pour l'enregistrement d'états des participants au bus (10-18) comprennent une mémoire pour stocker des vecteurs d'état.

18. Dispositif de diagnostic selon la revendication 16 ou 17, **caractérisé en ce que** les moyens pour l'enregistrement d'états des participants au bus (10-18), les moyens pour acquérir des paquets de données, et les moyens pour analyser les paquets de données et obtenir à partir de là les états actualisés des participants au bus (10-18), sont arrangés de façon à travailler d'une manière cyclique.

19. Dispositif de diagnostic selon l'une des revendications 16 à 18, **caractérisé en ce que** les moyens pour l'analyse des paquets de données sont arrangés de façon à obtenir aussi un état actualisé du bus de terrain (20); et les moyens pour enregistrer des états des participants au bus (10-18) sont arrangés pour enregistrer aussi l'état actualisé du bus de terrain (20).

20. Dispositif de diagnostic selon l'une des revendications 16 à 19, **caractérisé par** des moyens pour envoyer un paquet de données à au moins un appareil de terrain, qui est un participant au bus (10-18), les moyens pour analyser les paquets de données étant arrangés pour obtenir à partir de là l'état actualisé de l'appareil de terrain (12-18) en fonction d'un paquet de données en réponse émis par l'appareil de terrain.

21. Dispositif de diagnostic selon l'une des revendications 16 à 20, **caractérisé par** un affichage destiné à afficher les états actualisés des participants au bus (10-18).

22. Dispositif de diagnostic selon l'une des revendications 16 à 21, **caractérisé en ce que** les moyens pour analyser les paquets de données sont arrangés pour analyser les paquets de données par référence à des données d'entrée et/ou de sortie des participants au bus (10-18).

23. Dispositif de diagnostic selon l'une des revendications 16 à 22, **caractérisé en ce que** les moyens pour analyser les paquets de données sont arrangés de façon à analyser les paquets de données par référence aux corrections automatiques d'erreur, aux paquets de données défectueux et/ou aux modifications d'état des participants au bus (10-18).

24. Dispositif de diagnostic selon la revendication 23, **caractérisé par** des moyens pour l'acquisition et l'évaluation statistique de la fréquence des corrections automatiques d'erreur, des paquets de données défectueux et/ou des modifications d'état, pour acquérir une éventuelle dégradation du bus ou des participants au bus (10-18).

25. Dispositif de diagnostic selon l'une des revendications 16 à 24, **caractérisé en ce qu'**il est réalisé dans un ensemble autonome, qui peut être raccordé provisoirement au bus de terrain (20) afin d'analyser le système de bus de terrain.

26. Dispositif de diagnostic selon l'une des revendications 16 à 24, **caractérisé en ce qu'**il est intégré à demeure dans le système de bus de terrain.
